# EUROPEAN PATENT APPLICATION

(11) **EP 1 258 337 A1**
(43) Date of publication of application: **20.11.2002**
(21) Application number: 02010144.0
(22) Date of filing: 13.05.2002
(51) Int. Cl.: B29C 65/18, B65B 11/10

(54) **Device for welding overlapped edges of flaps of a sheet wrapping a group of articles**

(30) Priority: 14.05.2001 IT BO20010296
(71) Applicant: Gamberini, Gianluigi, 40137 Bologna (IT)
(72) Inventor: Gamberini, Gianluigi, 40137 Bologna (IT)
(74) Representative: Dall'Olio, Giancarlo

(57) **Abstract**

The device (D) for welding overlapped edges of the vertical flaps of a sheet wrapping a group of articles is situated between a feeding line (A) for transferring said group of articles (10), so as to intercept, hit and pull the sheet (F), fed in stretched configuration crosswise to the outlet of the feeding line (A), and a conveying station (C), which receives the group of articles (10) wrapped partially with the sheet (F). The device (D) includes a first inner folding plate (1), which is operated to hit a first flap (L1) of the sheet (F) and fold it, so as to make it adhere to the group of articles (10). The first inner folding plate (1) includes matching means (12) which freely match with and are passed through by corresponding welding means (14) connected to second outer folding plate (2), opposite to the first inner folding plate (1). The second outer folding plate (2) is, in step relation with the operation of the first inner folding plate (1), moved to hit a second flap (L2) of the sheet (F) to fold it and make it adhere to the first flap (L1) and overlaps partially the first inner folding plate (1). The matching means (12) allow positioning of the welding means (14) directly in correspondence to the overlapped edges of the flaps, first (L1) and second (L2), in order to weld them.

## Description

### DESCRIPTION OF THE INVENTION

The present invention relates to the particular technical field concerning automatic machines for packaging groups of articles in a protective film of plastic heat-weldable material.

More precisely, the present invention relates to a device for welding overlapped edges of flaps of a sheet wrapping a group of articles.

The group of articles can be formed by a pack of one, two, four or more rolls of paper (kitchen towels, toilet paper, blotting paper, etc) arranged in one or more layer, the layers being disposed one over another.

It is known that the welding of the overlapped edges of the sheet wrapping the group of articles is of fundamental importance during different .steps of production of the final package.

Actually, a suitable mutual joining of the edges determines and assures best stability of the package even after some time, assuring also the necessary tightness to atmospheric agents, in particular humidity.

In the machines currently used, the device for welding the overlapped edges of the sheet wrapping the group of articles usually acts in a position between a line for feeding and transferring this group of articles and a conveying station, associated to the previous feeding line, to convey the package formed by the group of articles wrapped within the above mentioned packaging sheet toward subsequent working stations, e.g. for completing the package, sorting and distributing thereof.

The line for feeding and transferring includes substantially a station for receiving and positioning a group of articles to be packaged, formed previously in suitable working stations, and pusher means which transport the group of articles toward the conveying station.

During the transport, the group of articles intercepts, hits and pulls a packaging sheet, fed previously at the outlet of the feeding line, by suitable positioning means.

The group of articles, with the packaging sheet partially wrapped around it, is then transferred to the conveying station.

The conveying station can include e.g. a pair of conveying means with parallel, opposite runs or pairs of gripping means of a conveying line associated with an additional abutment surface.

The first solution is usually used when the feeding and transferring line is situated along the same working surface, substantially horizontal, of the conveying station, while the second solution is used when the line for feeding and transferring groups of articles is situated below the conveying station.

Anyway, in both cases the conveying station fulfills the function of receiving the group of articles, partially wrapped within the packaging sheet, determining its complete wrapping along three successive sides of the longitudinal extension.

In suitable time relation with the introduction of the group of articles into the conveying station, the welding device is operated to weld the overlapped edges of the packaging sheet along the remaining fourth side of the longitudinal extension of the group of articles.

The welding device includes substantially a pair of opposite folding plates, first inner and second outer, which are operated in suitable time relation with the positioning of the group of articles into the conveying station, so as to pass from a rest open position to a working close position, in which they hit and fold the opposed edges of the opposite flaps of the packaging sheet by putting them one over the other along the fourth side of the longitudinal contour of the group of articles. Then, a suitable welding unit welds the relative edges.

More precisely, during its passage from the open position to the close position, the first inner folding plate hits and folds a corresponding first flap of the packaging sheet, making it adhere directly to the fourth side of the longitudinal contour of the group of articles, while the second outer folding plate, during its passage from the open position to the close position, hits and folds a corresponding second flap of the packaging sheet, making it adhere to the fourth side of the longitudinal contour of the group of articles and, at the same time, places it partially over the first flap as well as over the first inner folding plate.

For this purpose, the second outer folding plate is shaped in such a way as to overlap complementarily the first inner folding plate, in order to hold the second flap of the packaging sheet therebetween.

According to the first solution, the pair of folding plates is situated along a substantially vertical plane, while according to the second solution, the above-mentioned pair of folding plates act along a substantially horizontal plane.

However, in both cases, in order to weld the edges of the two overlapped flaps, first and second, it is necessary to slightly withdraw the first inner folding plate to allow the second flap to wholly overlap the first flap, and to allow the welding unit to act directly in the region of the edges to weld.

The welding unit can be connected directly to the outer folding plate, or can include a suitable welding group aimed at being operated to insert the relative welding heads into holes made in the outer folding plate.

However, the withdrawing of the inner folding plate can cause the first flap to adhere thereto and partially withdraw. Consequently, the packaging sheet can take an inappropriate stretched configuration around the contour of the group of articles during the welding step.

This can produce a package, whose configuration is not perfectly stretched and adhering to the sheet around the group of articles, and consequently, the package is crumbled in an undesired way.

According to a solution used in the prior art to avoid the above mentioned drawback, pulling means, e.g. small belts are situated directly on the inner folding plate to be operated in the direction opposite to the withdrawing direction of the first inner folding plate, so as to perform a kind of contrary action in order to avoid the simultaneous withdrawing of the flap associated thereto.

On one hand, this solution has avoided the above drawback, however, on the other hand it has caused functional and constructive complications as well as increased the dimensions.

The main object of the present invention is to propose a device for welding overlapped edges of flaps of a sheet wrapping a group of articles, which avoids the above mentioned problems, not resolved by the prior art.

More precisely, the specific object of the present invention is to propose a device, which allows welding the overlapped edges of the flaps of the sheet wrapping a group of articles and does not require a previous withdrawing of the inner folding plate.

Another object of the present invention is to propose a device, which allows welding the overlapped edges of the flaps of the sheet wrapping a group of articles maintaining, at the same time, best stretched configuration of the sheet around the group of articles.

A further object of the present invention is to propose a device obtained by a simple technical solution, particularly functional and extremely reliable.

The above-mentioned objects are obtained in accordance with the contents of the claims.

The characteristic features of the present invention will be pointed out in the following description of a preferred, but not only embodiment of the device for welding the overlapped edges of the flaps of the sheet wrapping a group of articles, with reference to the enclosed drawings, in which:
- Figure 1 is a front schematic view of the proposed device for welding the overlapped edges of the flaps of the sheet wrapping a group of articles, situated between a line for feeding the group of articles and a station for conveying the group of articles wrapped with the packaging sheet;
- Figure 2 is a schematic, partially front and enlarged view of the proposed device in a particular welding step;
- Figure 3 is a section view along III-III of Figure 2;
- Figure 4 is a schematic front view of another possible embodiment of the device proposed by the present invention;
- Figure 5 is a section view along V-V of Figure 4, while Figure 5a is the same section view along V-V of Figure 4 of another embodiment of the proposed device.

With reference to the enclosed drawings, D indicates the device for welding the overlapped edges of flaps of a sheet wrapping a group of articles.

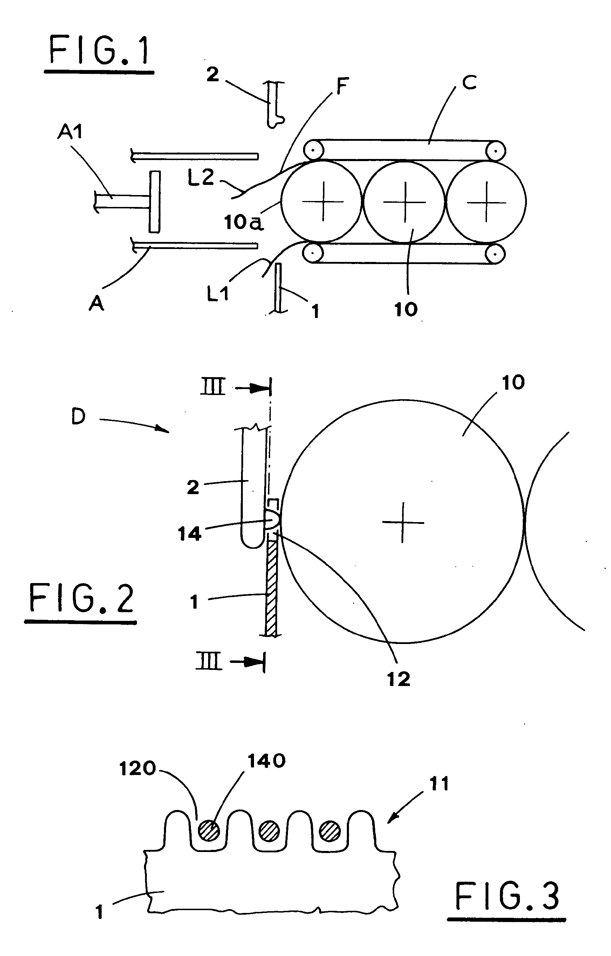

The device D, as for example shown in Figure 1, can be positioned directly downstream of a line A for feeding and transferring a group of articles 10 to be packaged with a packaging sheet F and directly upstream of a conveying station C.

The conveying station C can include for instance a pair of conveying members with opposed runs (see Figure 1).

The above-mentioned feeding and transferring line A is aimed at receiving a group of articles 10, formed previously in suitable working stations (not shown), and includes transferring means A1, which transfer the group of articles 10, so that the latter intercepts, hits and pulls a packaging sheet F, suitably positioned by positioning means (not shown), in stretched configuration and crosswise to the outlet of the line A.

The above mentioned conveying station C is aimed at receiving the group of articles 10, partially wrapped within the sheet F, in order to complete the wrapping with the sheet F along three subsequent sides of the longitudinal contour.

The proposed device D includes a pair of opposite folding plates, first inner 1 and second outer 2; according to the example embodiment shown in Figures 1, 2 and 3, the folding plates are positioned along a substantially vertical plane.

The folding plates, first inner 1 and second outer 2, are operated by actuating means, not shown, to move between a rest open configuration and a working close configuration.

More precisely, the first inner folding plate 1 is aimed at being operated, in step relation with the introduction of the group of articles 10 into the conveying station C, in the shown example at being raised from the open position to the close position to hit a first flap L1 of the sheet F and to fold it, so as it adheres to the remaining fourth side 10a of the longitudinal contour of the group of articles 10.

Likewise, the second outer folding plate 2 is aimed at being operated, in step relation with the operation of the first inner folding plate 1, to move, in the shown example to be lowered from the open configuration to the close configuration to hit a second flap L2 of the sheet F and to fold it, so as it adheres to the first flap L1, folded previously by the first inner folding plate 1 and to partially overlap the first inner folding plate 1 (see Figure 2).

The end 11 of the first inner folding plate 1, corresponding with the second outer folding plate 2, includes matching means 12, which, due to the positioning of the folding plates, inner 1 and outer 2, in their close position, are freely engaged by corresponding welding means 14 associated with the second outer folding plate 2.

For example, the welding means 14 can include, as shown in Figures 2 and 3, welding heads 140, situated directly on the second outer folding plate 2 on the side turned toward the fourth side 10a of the longitudinal contour of the group of articles 10.

The above-mentioned matching means 12 include a series of indentations 120, which receive freely the above-mentioned welding heads 140, so as to allow their positioning directly in correspondence to the overlapped edges of the flaps, first L1 and second L2, of the sheet F, in order to weld them.

Therefore, the presence of the indentations 120 on the end 11 of the first inner folding plate 1 corresponding with the second outer folding plate 2 in close configuration of the folding plates allows advantageously the welding heads 140 of the second outer folding plate 2 to be positioned directly on both overlapped flaps, first L1 and second L2, of the sheet F, avoiding the withdrawing of the first inner folding plate 1 and consequently, avoiding the risk of undesired loosening of the sheet F.

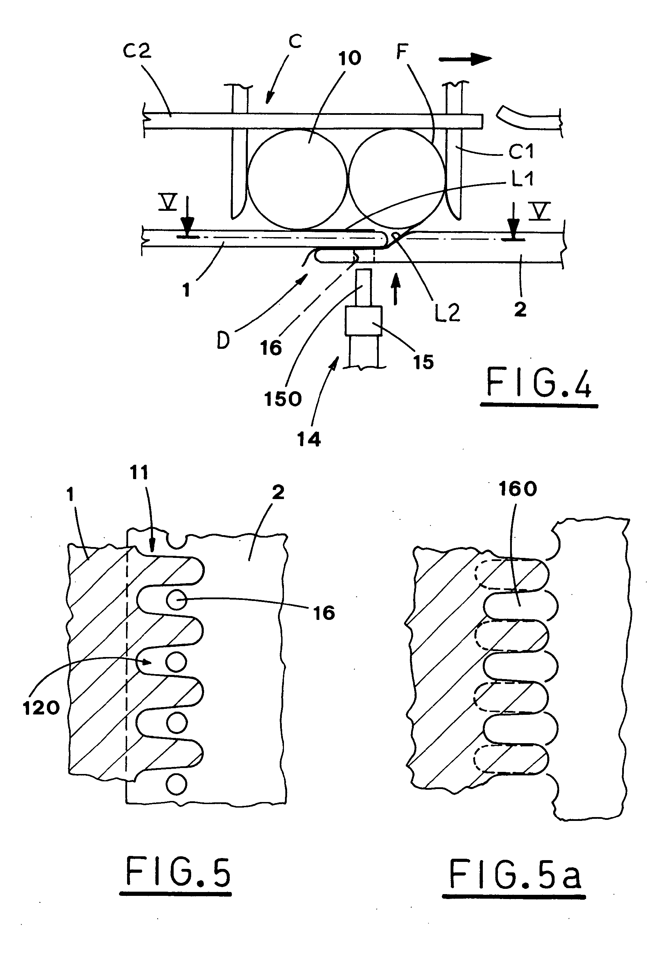

In Figure 4, both opposite folding plates, first inner 1 and second outer 2, are positioned along a substantially horizontal plane, but still between a conveying station C and a feeding and transferring line A (not shown) for receiving and transferring a group of articles toward the conveying station C, situated above.

The conveying line C can include e.g. pairs of gripping means C1 of a conveying line (not shown), which, cooperating with an additional plate C2 allow the wrapping of the sheet F around three subsequent sides of the longitudinal contour of the group of articles 10.

The welding means 14, associated to the second outer folding plate 2 can include a welding group 15 equipped with welding heads 150 which are introduced into through holes 16 made on the second outer folding plate 2 so as to face, due to the positioning of the folding plates, inner 1 and outer 2, in the close configuration, the indentations 120 of the first inner folding plate 1, and to allow the welding heads 150 to act directly on the overlapped edges of the flaps, first L1 and second L2 of the sheet F (see Figure 5a).

Moreover, according to another interesting embodiment, the second inner folding plate can have indentations 160 facing, in close configuration of the folding plates, the corresponding indentations 120 of the inner folding plate 1, thus allowing the welding heads 150 to act directly on the overlapped edges of the flaps, first L1 and second L2, of the sheet F (see Figure 5b).

Consequently, the proposed device allows welding the overlapped edges of the flaps of a sheet wrapping a group of articles in a simple and immediate way, assuring at the same time maintaining of the best configuration, stretched and adhering, of the sheet around the group of articles.

It is also to be pointed out, that the proposed device is obtained by a simple technical solution, extremely functional and reliable.

## Claims

1. Device for welding overlapped edges of the vertical flaps of a sheet wrapping a group of articles, situated between a feeding line (A) for transferring said group of articles (10), formed previously in corresponding working stations, so as to intercept, hit and pull said sheet (F), which is fed in stretched configuration crosswise to the outlet of said feeding line (A) by relative positioning means, and a conveying station (C), which receives said group of articles (10) wrapped with said sheet (F) along three subsequent sides, of the relative longitudinal contour, and including a pair of opposite folding plates, first inner (1) and second outer (2), moving between a rest open configuration and a working close configuration, said device (D) being **characterized in that** said first inner folding plate (1), which is aimed, during its passage from said open configuration to said close configuration, at hitting a first flap (L1) of said sheet (F) and folding it, so as to make it adhere to the fourth side (10a) of the longitudinal contour of said group of articles (10), includes matching means (12), which freely match with and are passed through by corresponding welding means (14) associated to said second outer folding plate (2), said second outer folding plate (2) being aimed at hitting, during the passage from said open configuration to said close configuration, a second flap (L2) of said sheet (F) to fold the latter and make it adhere to said first lower flap (L1) and at overlapping partially said first inner folding plate (1), said matching means (12) being aimed, due to the positioning of said folding plate, inner (1) and outer (2), in their close configuration, at allowing positioning of said welding means (14) directly in correspondence to said overlapped edges of said flaps, first (L1) and second (L2), in order to weld them.

2. Device, according to claim 1, **characterized in that** said matching means (12) include indentations (120), which are made in the region of the end (11) of said first inner folding plate (1) corresponding to said second outer folding plate (2) and through which said welding means (14) pass freely.

3. Device, according to claim 2, **characterized in that** said welding means (14) include a plurality of welding heads (140) situated directly on said second outer folding plate (2) on its side turned toward said fourth side (10a) of the longitudinal contour of the group of articles (10).

4. Device, according to claim 2, **characterized in that** said welding means (14) include a plurality of welding heads (150) carried by a welding group (15), connected functionally to said second outer folding plate second outer folding plate (2) and aimed at being introduced into corresponding through holes (16) made on said second outer folding plate (2), so as to face said indentations (120), due to the positioning of said folding plates, inner (1) and outer (2), into their close configuration, and to allow said welding heads (150) to act directly on said overlapped edges of said flaps, first (L1) and second (L2).

5. Device, according to claim 2, **characterized in that** said welding means (14) include a plurality of welding heads (150) carried by a welding group (15), connected functionally to said second outer folding plate second outer folding plate (2) and aimed at being introduced into corresponding indentations (160) made on said second outer folding plate (2), so as to face said indentations (120), due to the positioning of said folding plates, inner (1) and outer (2), into their close configuration, and to allow said welding heads (150) to act directly on said overlapped edges of said flaps, first (L1) and second (L2).
